# FASCICULE DE BREVET EUROPEEN

(11) **EP 0 562 934 B1**
(45) Date de publication et mention de la délivrance du brevet: **25.09.1996**
(21) Numéro de dépôt: 93400725.3
(22) Date de dépôt: 22.03.1993
(51) Int. Cl.: B29C 45/26, B29D 11/00, G02B 6/38, B29C 33/00

(54) **Dispositif de moulage comportant une contre-pièce de guidage de broche pour le moulage de viroles de connecteurs de fibres optiques, et virole moulée au moyen d'un tel dispositif**
Ein Dornführungsgegenstück enthaltende Giessvorrichtung zum Giessen von faseroptischen Steckerstiften und mit Hilfe dieser Vorrichtung gegossener Steckerstift
Moulding apparatus containing pin guiding counterpart for moulding fiber optic connector ferrules and moulded ferrule utilizing this apparatus

(30) Priorité: 24.03.1992 FR 9203523
(43) Date de publication de la demande: 29.09.1993
(73) Titulaire: FRAMATOME CONNECTORS INTERNATIONAL, 92084 Paris La Défense (FR)
(72) Inventeur: Lalaouna, Said, F-72400 La Ferte Bernard (FR); Ollivier, Jean-Francois, F-22230 Merdrignac (FR); Penha, Manuel, F-72100 Le Mans (FR)
(74) Mandataire: Keib, Gérard

(56) Documents cités:
- US-A- 4 264 128
- PATENT ABSTRACTS OF JAPAN vol. 10, no. 83 (M-466) 2 Avril 1986 & JP-A-60 224 516 (HITACHI)
- DATABASE WPIL Week 9009, Derwent Publications Ltd., London, GB; AN 90-063230 & JP-2 016 021 (MITSUBISHI CABLE)
- PATENT ABSTRACTS OF JAPAN vol. 8, no. 228 (P-308) 19 Octobre 1984 & JP-A-59 109 010 (KERU KK)
- PATENT ABSTRACTS OF JAPAN vol. 6, no. 179 (P-142) 14 Septembre 1982 & JP-A-57 093 308 (HITACHI CHEM)

## Description

L'invention concerne le moulage des viroles en matière plastique pour connecteurs de fibres optiques.

A la différence des viroles en matériau céramique, qu'il est possible d'usiner avec une très grande précision mais dont le coût est élevé, les viroles en matière plastique, beaucoup moins coûteuses, présentent souvent une médiocre précision dimensionnelle.

En effet, les techniques classiques de moulage des pièces en matière plastique (qu'il s'agisse de matériaux thermoplastiques ou thermodurcissables) permettent rarement d'atteindre les précisions nécessaires : typiquement, une virole est une pièce cylindrique de 12 mm de long avec un diamètre extérieur de 2500 µm et un alésage axial de diamètre 126 µm ; ces deux diamètres doivent être obtenus avec une précision de {0, +1 µm} et un défaut de concentricité d'au plus 0,7 µm entre diamètre extérieur et diamètre intérieur.

Le moule comporte à cet effet une empreinte creuse cylindrique ou "canon de précision" soigneusement usinée, recevant une broche axiale portant à son extrémité une aiguille calibrée de 126 µm {0, -1 µm} de diamètre. Ces deux pièces (canon et aiguille) peuvent être réalisées avec une très grande précision, mais il demeure la difficulté d'obtenir une concentricité meilleure que 0,7 µm entre elles deux. Cette concentricité est d'autant plus difficile à obtenir que, compte tenu des contraintes de moulage, la broche portant l'aiguille est reliée à l'empreinte inférieure du moule et qu'il n'est donc pas possible de solidariser aiguille et canon, ces deux éléments devant pouvoir être séparés à chaque cycle de moulage.

Pour remédier à cette difficulté, il a été proposé d'utiliser une contre-pièce ou "pièce de repilotage" dont le diamètre extérieur est monté serré dans le canon de précision et porte un alésage de 127 m de diamètre recevant et positionnant donc avec précision l'aiguille calibrée lors de la fermeture du moule et pendant la phase d'injection de la matière plastique (fonction de guidage).

Toutefois, cette contre-pièce a pour inconvénient de venir empêcher, pendant l'injection, l'évacuation des gaz contenus dans la cavité de moulage (fonction d'éventage), évacuation qui, compte tenu des contraintes de moulage des viroles de précision, ne peut avoir lieu par le plan de joint du moule comme à l'accoutumée. Par ailleurs, le jeu entre l'aiguille de 126 µm et l'alésage de 127 µm de la contre-pièce est tout à fait insuffisant pour servir d'évent, car la perte de charge serait bien trop importante dans un tel interstice, compte tenu notamment du fait que les gaz résiduels doivent être évacués en un laps de temps très faible, l'injection de la matière plastique ne durant que quelques secondes (parfois même moins de deux secondes).

Les techniques de ce type proposées jusqu'à présent ne donnent pas, comme on l'exposera plus loin, de solution qui soit satisfaisante à la fois sur le plan de l'éventage et sur celui du guidage. On s'est jusqu'à présent heurté à un dilemne entre, d'une part, des jeux importants ou des chaînes de cotes complexes qui entraînent une perte de la précision de guidage et, d'autre part, de faibles jeux qui empêchent un éventage convenable.

Le but de l'invention est de proposer une géométrie de contre-pièce qui satisfasse à la fois les exigences des fonctions de guidage et d'éventage et permette d'obtenir la concentricité recherchée entre diamètre intérieur et diamètre extérieur des viroles moulées.

Cette contre-pièce fait partie d'un dispositif du type précité, comportant plus précisément : une empreinte formant cavité de moule, comprenant un canon de moulage cylindrique calibré définissant le diamètre extérieur de la virole à mouler, et une empreinte inférieure fermant cette cavité de moule ; une broche, reliée à cette empreinte inférieure, s'étendant axialement dans la cavité et prolongée à son extrémité libre par une aiguille calibrée définissant le diamètre intérieur de la virole à mouler ; une contre-pièce, s'étendant axialement dans la cavité en vis-à-vis de la broche, cette contre-pièce comportant un alésage de guidage de l'aiguille recevant l'extrémité de celle-ci, de manière à assurer alors la concentricité entre aiguille et canon ; et des moyens d'éventage, permettant l'échappement des gaz présents dans la cavité de moule vers l'extérieur lors de l'injection de la matière plastique.

Selon un premier aspect de l'invention, les moyens d'éventage sont formés par une pluralité de régions de la contre-pièce se succédant en direction axiale, comprenant : une région cylindrique courte d'éventage, dont le diamètre laisse subsister entre contre-pièce et canon un jeu formant évent périphérique continu en communication avec la cavité de moulage ; une gorge formant chambre de tranquillisation ; et une région cylindrique longue de guidage, dont le diamètre nominal procure avec le canon un ajustement sans jeu présentant un serrage minimal, cette pièce étant pourvue d'évents longitudinaux discrets s'étendant le long de génératrices de cette région cylindrique longue.

Selon un second aspect de l'invention, la contre-pièce est une pièce essentiellement cylindrique de révolution entierement introduite dans le canon de moulage de la cavité de moulage avec un ajustement sans jeu présentant un serrage minimal. Dans ce cas, le diamètre intérieur du canon est de préférence défini à {0, -1 µm} et le diamètre extérieur de la contre-pièce est défini à {+1 µm, 0} pour un diamètre nominal de 2500 m, la contre-pièce étant avantageusement en un matériau céramique usiné.

Très avantageusement, la face frontale de la contre-pièce est conformée en gabarit, de manière à donner à la face homologue de la virole une forme finale prédéterminée, directement venue de moulage.

L'invention vise également, en tant que produit nouveau, une virole pour connecteurs de fibres optiques, caractérisée par une face frontale non usinée présentant une forme prédéterminée directement obtenue par moulage au moyen d'un dispositif présentant cette dernière caractéristique.

On va maintenant décrire plus en détail l'invention, en référence aux dessins annexés.

La figure 1 représente schématiquement, en coupe, un dispositif de moulage utilisant une contre-pièce de géométrie connue.

La figure 2 est une coupe, selon II-II de la figure 1.La figure 3 est homologue de la figure 1, pour une contre-pièce réalisée selon les enseignements de l'invention.

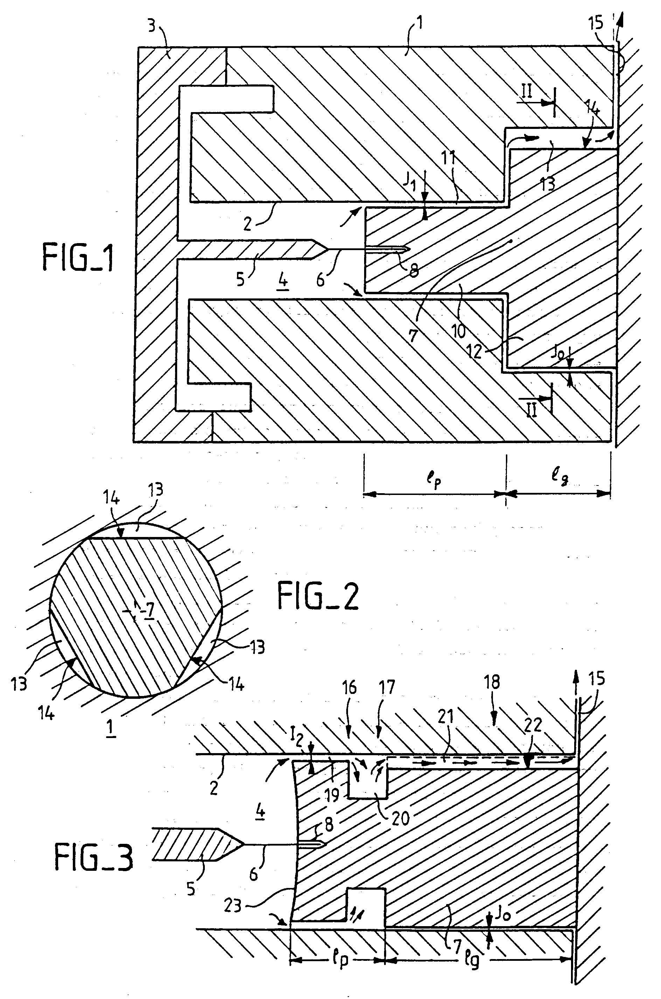

On va tout d'abord décrire un dispositif selon l'art antérieur, en référence aux figures 1 et 2.

Sur ces figures, la référence 1 désigne le corps de moule, qui comporte un alésage central 2 ou 〈〈canon de précision〉〉 et qui est fermé par un élément 3 formant empreinte inférieure. Les moyens d'injection de la matière plastique, de refroidissement du moule, de commande d'ouverture de celui-ci, etc., sont des moyens connus et pour cette raison n'ont pas été représentés.

Cet ensemble définit une cavité de moulage 4 à l'intérieur de laquelle est disposée une broche 5, solidaire du couvercle 3 et portant à son extrémité libre une aiguille calibrée 6 de 126 m de diamètre.Le diamètre intérieur de l'alésage 2 définira le diamètre extérieur de la virole à mouler (2500 µm), et le diamètre de l'aiguille calibrée 6 définira le diamètre intérieur de l'alésage de cette même virole (126 µm).

Pour maintenir précisément en place l'aiguille 6 pendant le moulage, c'est-à-dire pour assurer la concentricité entre cette aiguille et l'alésage 2, on prévoit une contre-pièce 7 insérée dans le canon de précision et comportant un alésage 8 de diamètre 127 µm recevant l'aiguille calibrée 6. La broche 5, solidaire de l'empreinte inférieure 3, se déplace avec celle-ci lors de la fermeture du moule (course de 200 mm environ), ce qui introduit l'aiguille dans la contre-pièce 7, et inversement à l'ouverture du moule, lors du démoulage de la virole.

La contre-pièce 7 comporte une partie antérieure 10, insérée dans le canon de moulage 2 avec un jeu J₁ laissant subsister un interstice 11 permettant le passage des gaz refoulés lors de l'injection de la matière plastique dans la cavité 4. La partie postérieure 12, quant à elle, est logée dans une cavité homologue avec un jeu J₀ le plus faible possible, de préférence nul, afin de permettre un guidage de précision de la contre-pièce 7. Pour permettre l'échappement des gaz refoulés par l'interstice 11, cette partie postérieure 12 comporte, comme on peut notamment le voir figure 2, un certain nombre de passages 13 constitués par des méplats 14 formés sur la pièce de manière à conserver la précision de guidage tout en laissant subsister un passage pour les gaz, par exemple trois méplats disposés à 120° les uns des autres. Ces gaz sont évacués par le plan de joint 15 de la partie postérieure du moule (le trajet des gaz refoulés est illustré par les flèches de la figure 1).Comme on peut le constater, cette configuration connue, si elle résout le problème de l'éventage, ne procure pas un guidage très précis de la contre-pièce 7 par rapport à l'aiguille 6 et ne permet donc pas d'obtenir une bonne concentricité entre cette aiguille 6 et le canon de moulage 2 : en effet, d'une part la longueur de guidage l_{g} relativement faible par rapport à la longueur en porte-à-faux (non guidée) lₚ relativement importante, d'autre part les deux diamètres d'alésage du canon 2 et les deux diamètres de la contre-pièce 7 conduisent à une chaîne de cotes complexe entre l'aiguille 6 et l'alésage 8, qui cumule les diverses incertitudes dimensionnelles. Pour pallier cet inconvénient, l'invention propose une nouvelle structure de contre-pièce, illustrée schématiquement figure 3.

La contre-pièce 7 de l'invention est constituée d'un élément cylindrique de révolution entièrement introduit dans le canon de précision 2 et comportant trois régions successives 16, 17, 18. La pièce 7 peut avantageusement être réalisée en un matériau céramique usiné.La région 16, disposée en vis-à-vis de la broche 5 et de l'aiguille 6, est une région cylindrique courte présentant avec l'alésage 2 un jeu J₂ de quelques micromètres, de manière à former un évent circulaire homogène 19, en communication avec la cavité 4. La seconde région 17 comporte, avantageusement, une gorge cylindrique 20 servant de chambre de tranquillisation.La troisième région 18 est formée une région cylindrique longue, dont le diamètre nominal procure avec le canon un un ajustement à serrage minimal, sans jeu et sans déformation, par exemple avec un diamètre extérieur de contre-pièce défini à {+1 µm, 0} pour un diamètre nominal de l'alésage 2 de 2500 µm défini à {0, -1 µm}. Cette région 18 de la contre-pièce comporte en outre des évents ponctuels 21 formés par des méplats 22 du même type que ceux décrits précédemment à propos de la figure 2, et permettant l'échappement des gaz de la chambre de tranquillisation 20 vers les plans de joint du moule.

On peut constater ainsi qu'à chaque région de la pièce 7 est dévolu un rôle particulier, joué de façon optimale :
- la région 16 assure le rôle d'éventage, en formant un évent de faible épaisseur (pour ne pas laisser passer la matière) et de faible longueur (pour ne pas perturber le guidage) et dont la circularité assure l'homogénéité de l'évacuation des gaz et donc l'absence de perturbation apportée au remplissage de la cavité par la matière plastique ;
- la région 17, grâce à sa gorge 20, sert de chambre de tranquillisation et permet d'assurer la transition entre l'évent continu 19 et les évents ponctuels 21 en réduisant la pression d'évacuation des gaz, en en régularisant l'écoulement, et en neutralisant ainsi les effets des hétérogénéités d'échappement des évents ponctuels (on notera à cet égard que les dimensions de la gorge 20 sont relativement peu critiques) ;
- la région 18, enfin, assure le rôle de guidage, avec une longueur en porte-à-faux minimale (le rapport lp/lg entre longueur non guidée et longueur guidée est très inférieur à celui de la configuration connue, comme on peut le voir en comparant les figures 1 et 3), et avec une chaîne de cotes minimale du fait que la pièce 7 est directement introduite dans le canon de moulage 2.

En pratique, on obtient ainsi entre la broche 5 et l'aiguille 6 d'une part, et l'alésage 8 de la contre-pièce 7 d'autre part, un jeu de 0,5 µm, parfaitement compatible avec la tolérance de concentricité requise de 0,7 µm, sans nuire aucunement à une bonne évacuation des gaz. En outre, la contre-pièce 7 peut assurer, outre ses fonctions d'éventage et de guidage, une troisième fonction de gabarit, en utilisant la forme de la face frontale 23 pour donner à la virole une forme particulière, brute de moulage, qui peut être une forme convexe, plane, plane à angles abattus, inclinée, etc. en fonction des performances optiques recherchées (on sait que la forme de la face avant influe sur celles-ci), et du connecteur devant recevoir la virole.

## Revendications

1. Un dispositif de moulage de viroles en matière plastique pour connecteurs de fibres optiques, comportant :
- une empreinte formant cavité de moule (4), comprenant un canon de moulage (2) cylindrique calibré définissant le diamètre extérieur de la virole à mouler, et une empreinte inférieure (3) fermant la cavité de moule,
- une broche (5) reliée au couvercle, s'étendant axialement dans la cavité et prolongée à son extrémité libre par une aiguille calibrée (6) définissant le diamètre intérieur de la virole à mouler,
- une contre-pièce (7), s'étendant axialement dans la cavité en vis-à-vis de la broche, cette contre-pièce comportant un alésage (8) de guidage de l'aiguille recevant l'extrémité de celle-ci lorsque la contre-pièce est déplacée en direction de la broche, de manière à assurer alors la concentricité entre aiguille et canon, et
- des moyens d'éventage, permettant l'échappement vers l'extérieur des gaz présents dans la cavité de moule lors de l'injection de la matière plastique,caractérisé en ce que la contre-pièce est une pièce essentiellement cylindrique de révolution entierement introduite dans le canon de moulage de la cavité de moulage avec un ajustement sans jeu présentant un serrage minimal.

2. Le dispositif de la revendication 1, dans lequel le diamètre intérieur du canon est défini à {0, -1 µm} et le diamètre extérieur de la contre-pièce est défini à {+1 µm, 0} pour un diamètre nominal de 2500 µm.

3. Le dispositif de la revendication 1, dans lequel la contre-pièce est en matériau céramique usiné.

4. Le dispositif de la revendication 1, dans lequel la face frontale (23) de la contre-pièce est conformée en gabarit, de manière à donner à la face homologue de la virole une forme finale prédéterminée, directement venue de moulage.

5. Une virole pour connecteurs de fibres optiques, caractérisée par une face frontale non usinée présentant une forme prédéterminée directement obtenue par moulage au moyen d'un dispositif selon la revendication 4.

## Claims

1. A ferrule moulding apparatus made of plastic material for fibre optic connectors, comprising:
- an indentation forming mould cavity (4), comprising a cylindrical calibrated mould body (2) defining the outer diameter of the ferrule to be moulded and a lower indentation (3) closing the cavity of the mould,
- a pin (5) connected to a lid extending axially into the cavity and extended at its free end by a calibrated needle (6) defining the inside diameter of the ferrule to be moulded,
- a counterpart (7), extending axially into the cavity opposite the pin, said counterpart comprising a needle guide bore (8) receiving the end of the needle when the counterpart is displaced in the direction of the pin so as to ensure the concentric relationship between the needle and the cylinder, and
- opening means permitting the escape to the outside of gases present in the mould cavity when plastic material is injected, characterised in that the counterpart is essentially revolution cylindrical, inserted completely into the cylinder of the mould cavity to fit free from play with minimal interference.

2. The apparatus of claim 1, in which the inside diameter of the cylinder is defined as {0, -1µm} and the outer diameter of the counterpart is defined as {+1µm, 0} for a nominal diameter of 2500 µm.

3. The apparatus of claim 1, in which the counterpart is made of shaped ceramic material.

4. The apparatus of claim 1, in which the front face (23) of the counterpart conforms to a moulding template so as to give the homologous face of the ferrule a final predetermined form directly from the mould.

5. A ferrule for fibre optic connectors, characterised by a non-machined front face having a predetermined form obtained directly by moulding by means of the apparatus according to claim 4.

## Patentansprüche

1. Formgußvorrichtung für einen Kunststoffring für faseroptische Stecker, die umfaßt:
- ein Nest, das den Gußhohlraum (4) bildet und ein zylindrisches, kalibriertes Formrohr (2) umfaßt, das den Außendurchmesser des zu gießenden Rings definiert, und ein unteres Nest (3), das diesen Gußhohlraum verschließt,
- einen Dorn (5), der mit dem Deckel verbunden ist und sich axial in dem Hohlraum erstreckt und an seinem freien Ende durch eine kalibrierte Nadel (6) verlängert ist, die den Innendurchmesser des zu gießenden Rings definiert,
- ein Gegenstück (7), das sich dem Dorn gegenüber axial in dem Hohlraum erstreckt, wobei dieses Gegenstück eine Führungsbohrung (8) für die Nadel umfaßt, die das Ende derselben aufnimmt, wenn das Gegenstück in Richtung auf den Dorn bewegt wird, um dann die Konzentrizität zwischen Nadel und Rohr zu gewährleisten, und
- Lüftungsvorrichtungen, die den Austritt der in dem Gußhohlraum vorhandenen Gase nach außen beim Einspritzen des Kunststoffs ermöglichen, dadurch gekennzeichnet, daß das Gegenstück ein im wesentlichen zylindrisches Drehelement ist, das vollkommen in das Gußrohr des Gußhohlraums mit einer Passung ohne Spiel und minimaler Pressung eingeführt ist.

2. Vorrichtung nach Anspruch 1, bei welcher der Innendurchmesser des Rohrs vorzugsweise {0, -1 µm} und der Außendurchmesser des Gegenstücks {+1 µm, 0} bei einem Nenndurchmesser von 2500 µm betragen.

3. Vorrichtung nach Anspruch 1, bei welcher das Gegenstück aus bearbeitetem Keramikmaterial besteht.

4. Vorrichtung nach Anspruch 1, bei welcher die Stirnseite (23) des Gegenstücks in Form einer Schablone gearbeitet ist, um der entsprechenden Seite des Rings eine direkt angegossene, vorbestimmte endgültige Form zu geben.

5. Ring für faseroptische Stecker, gekennzeichnet durch eine nicht bearbeitete Stirnseite, die eine vorbestimmte Form aufweist, die direkt beim Gießen mittels einer Vorrichtung nach Anspruch 4 erhalten wurde.
